# EUROPEAN PATENT SPECIFICATION

(11) **EP 0 562 999 B1**
(45) Date of publication and mention of the grant of the patent: **02.11.1995**
(21) Application number: 93500034.9
(22) Date of filing: 24.03.1993
(51) Int. Cl.: F16L 19/08, F16L 47/04

(54) **Nipple for a hermetical coupling between pipes**
Anschlussnippel für hermetische Verbindung zwischen Rohren
Raccord pour la connexion hermétique de tuyaux

(30) Priority: 26.03.1992 ES 9200744
(43) Date of publication of application: 29.09.1993
(73) Proprietor: FORPLAST, S.A., E-08520 Les Franqueses del Valles, Barcelona (ES)
(72) Inventor: Planes Vila, Juan, c/o Forplast, S.A., E-08009 Les Franqueses del Valles, Barc. (ES)
(74) Representative: Pastells Teixido, Manuel

(56) References cited:
- DE-U- 8 629 297
- GB-A- 1 297 161
- US-A- 3 486 775

## Description

The present invention relates to a nipple for a hermetical coupling between pipes according to the preamble of claim 1.

This nipple is of the type comprising two or more coupling necks and at least one of the necks having inside an annular sealing gasket retained between a neck step and a bushing inserted thereinto and bearing on the neck mouth by means of an external rim having said bushing at the opposite end to the end contacting the gasket.

The pipe to be connected to this neck remains closely fitted when inserted thereinto by means of said gasket and the clamping to the neck is obtained with a nut engaged on said neck and operating, if suitably handled, on a tapered external surfaced gripping-clamp being seized over said pipe.

A drawback is seen however in this type of known nipples in that if the nut is disengaged for any reason whatever, not only then goes off also the gripping-clamp, but also the bushing can accidentally go off and even the gasket too, raising for the user not aware of the nipple construction the subsequent problem of having to suitably reassembly the nipple placing each part at the respective location.

Another drawback is seen in these nipples in that a hermetical gasket at times has a seemingly poorly formed construction preventing it to be correctly close-fitted to the associated pipe bringing about then a defective sealing in the pipe coupling.

These drawbacks or problems and other derived therefrom can be remedied with the nipple being the object of the present invention having as a main characteristic the fact that said bushing has an external peripheral undercutting between the rim engaged against the mouth of the neck and the edge of the end contacting the gasket, in this edge being configured a small rim which if the bushing is outwardly displaced because of said disengagement of the pipe clamping members, this small rim abuts against the peripheral rib provided inside said neck to prevent any accidental exit of the bushing and possibly also of the gasket, the user being thus avoided the problem of reassembling the nipple.

Advantageously, the bushing portion inserted into the neck has a length somewhat greater than that existing between the gasket, when it is placed against the inside step of said neck, and the mouth of the neck, so that if the nut is tightened against the gripping-clamp to have the latter seized well on the pipe, the gripping-clamp is then longitudinally moved driving the bushing applied against the sealing gasket, which is axially compressed and radially expanded against the pipe without any possibility of creating voids or any slits capable of obstructing the sealing sought for in the coupling.

To facilitate further the explanation, the present description is accompanied by a drawing sheet showing a practical:case of embodiment only cited by way of a non-exhaustive example of the scope of the present invention.

In the drawings:

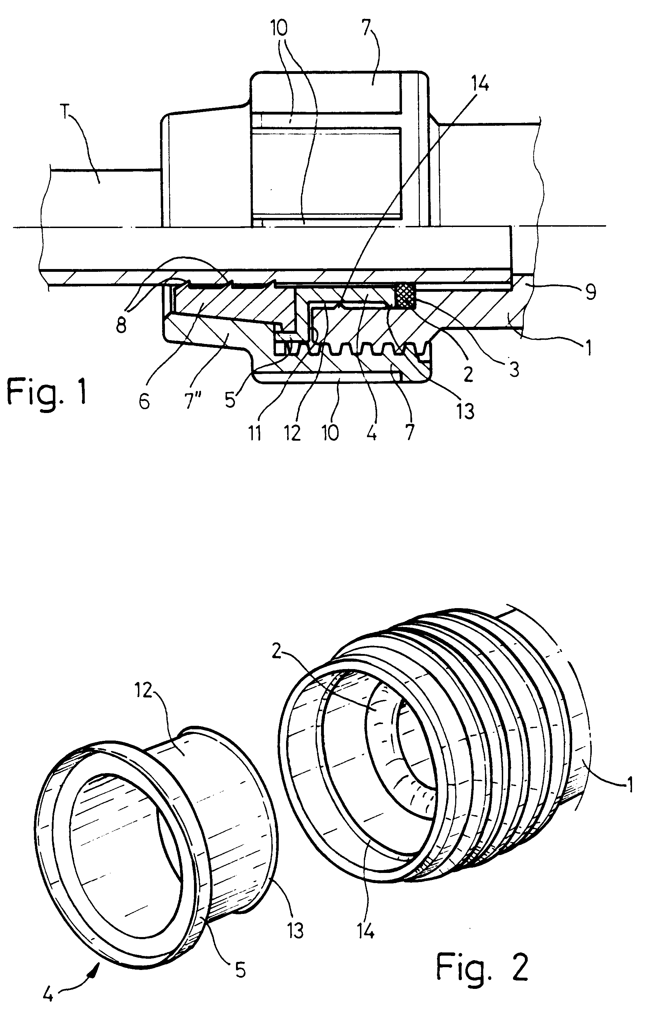

Figure 1 is a half-sectioned side view of the nipple portion associated to a neck and a pipe being already connected thereto, and
Figure 2 is a perspective view of said neck with the bushing ready to be fitted thereto but without the pipe clamping members to be connected which are not either illustrated.

According to these figures, the nipple for a hermetical coupling between pipes as illustrated comprises a body (not shown) possibly having several configurations in accordance with the number of connecting necks involved and the nipple requirements, these necks comprising or at least one of them, neck 1, an annular O-ring 2 closely fitted inside said neck 1, the O-ring remaining retained between an inside step 3 thereof and a bushing 4 inserted into said neck.

Bushing 4 having at the opposite end to the one end contacting said gasket 2, a L-shaped peripheral rim 5 wherein is inserted the wider end of an outwardly tapered gripping-clamp 6, so that a nut 7 may be tightened thereover, this nut threadedly engaged on the neck 1 and forced to sink into the pipe T inserted into said neck by means of inside peripheral teeth means 8 provided on said gripping-clamp, whereby after the nut is strung together with the gripping-clamp 6, the bushing 6 and the O-ring 2, the nut abuts then against a step 9 inside the neck 1, remaining thus the neck ready for said clamping.

Nut 7 having at the frontal portion 7', the one where it is threadedly engaged on the cylindrically configured neck 1, external longitudinal rib means 10 equally spaced and distributed to facilitate handling while the rear portion 7'' is narrower and tapered to suitably operate on the gripping-clamp 6.

Moreover, bushing 4 having in the portion inserted into the neck 1, a somewhat greater length than the inside portion of said neck going from the mouth of the neck to the O-ring 2 and consequently a small space 11 remained between the rim 5 of said bushing 4 and the mouth of the neck 1 at the passive portion of the nut 7 which if operated on the gripping-clamp 6 longitudinally displaces the latter and the bushing 4 is then also driven by the gripping-clamp 6 against the gasket 2 which on being axially compressed is radially expanded against the neck 1 and the pipe T,the coupling hermetical sealing is thus firmly secured.

Bushing 4 having also an external peripheral undercutting 12 between rim 5 and edge of the opposite end contacting with the gasket 2 remaining configured in this edge a small rim 13 which, if the nipple-nut 7 is disengaged for any reason whatever, with the nut will only go out the gripping-clamp 6 because the rim 13 of the bushing 4 will be abutting with an inside peripheral rib 14 of said neck 1 if said bushing is outwardly slided from the neck 1,preventing the neck any accidental exit of said bushing 4 and the subsequent coupling of said gripping-clamp 6 and nut 7 will thus be facilitated.

## Claims

1. Nipple for a hermetical coupling between pipes comprising at least one of the coupling necks (1) of one of the pipes, an annular sealing gasket (2) retained between an inside step (3) of said neck (1) and the end of a bushing (4) inserted thereinto and the other end having an external rim (5) applied against the mouth of said neck (1), characterized in that said bushing (4) has an external peripheral undercutting (12) between said rim (5) and the edge of the opposite end thereof in contact with the gasket, in this edge being configured a small rim (13) such that, in case the bushing becomes outwardly displaced from the neck because the clamping members are disengaged from the associated pipe, this rim (13) will then be in abutment against a small rib (14) provided at the inside periphery of said neck (1) which will prevent thereby any accidental exit of the bushing (4) and even of the gasket (2).

2. Nipple for a hermetical coupling between pipes, according to claim 1, wherein the bushing portion inserted into the neck (1) has a somewhat greater length than that existing between the gasket (2) and the mouth of said neck (1), such that if the nut (7) engaged on the neck (1) is tightened and a gripping-clamp (6) whereto the associated pipe (T) is seized thereon is operated thereupon by the nut (7), the gripping-clamp (6) will then be longitudinally displaced and the bushing (4) driven against the gasket (2) which on being axially compressed will also be radially expanded against said pipe (T) already closely fitted by the gasket (2) and the coupling sealing will thus be firmly secured.

## Patentansprüche

1. Anschlussnippel für die hermetische Verbindung zwischen Rohren, an wenigstens einer der Kupplungsmuffen (1) eines der Rohre, mit einem Dichtring (2), welcher zwischen einer Innenabstufung (3) der genannten Kupplungsmuffe (1) und dem Ende einer Muffe (4) zurückgehalten wird, welche in denselben eingeführt wird und dessen anderes Ende einen aufgebogenen Rand (5) aufweist, welcher an der Mündung der genannten Muffe (1) anliegt, dadurch gekennzeichnet, dass die Muffe (4) zwischen der genannten Randaufbiegung (5) und dem Rand seines anderen, mit der Dichtung in Kontakt stehenden Endes eine zylindrische Abarbeitung (12) aufweist, wobei an diesem Rand eine kleine Randverstärkung (13) vorgesehen ist, welche im Falle einer Verschiebung der Muffe aus der Kupplung heraus infolge einer Entkupplung der Befestigungselemente des entsprechenden Rohres, auf eine kleine Rippe (14) stösst, welche die Kupplungsmuffe (1) auf ihrer Innenfläche aufweist und welche vermeidet, dass die Muffe (4) und anschliessend eventuell die Dichtung (2) herausgleiten könnten.

2. Anschlussnippel für die hermetische Verbindung zwischen Rohren, gemäss Patentanspruch 1, bei welchem der in die Kupplungsmuffe (1) eingeführte Teil der Muffe (4) etwas länger ist als der zwischen dem Dichtring (2) und der Mündung der Muffe (1) bestehende Abstand, so dass, falls die Mutter (7) angezogen wird, welche auf der Kupplungsmuffe (1) aufsitzt, diese Mutter (7) einen Spannkegel (6) betätigt, welcher das entsprechende Rohr (T) fest umschliesst; der Spannkegel (6) verschiebt sich dann in Längsrichtung und schiebt die Muffe (4) gegen die Dichtung (2) welche sich infolge des auf dieselbe axial ausgeübten Druckes radial an das genannte Rohr (T) anpresst, an welches die Dichtung (2) bereits anlag, wodurch die hermetische Verbindung durch das Anschlussnippel sichergestellt wird.

## Revendications

1. Raccord pour la connexion hermétique de tuyaux comprenant, sur au moins l'un des collets d'accouplement (1) de l'un des tuyaux, un joint annulaire d'étanchéité (2) bloqué entre un rebord intérieur (3) de ce collet (1) et l'extrémité d'une frette (4) introduite dans celui-ci, dont l'autre extrémité présente un rebord extérieur (5) qui s'applique contre l'embouchure de ce collet (1), caractérisé par le fait que cette frette (4) présente un chanfrein périphérique extérieur (12) entre ce rebord (5) et le bord de son extrémité opposée de contact avec le joint, ce bord comportant un petit rebord (13) qui, quand la frette se déplace à l'extérieur du collet par suite du désaccouplement des éléments de fixation du tuyau correspondant, butera contre une petite nervure (14) dont est muni ce collet (1) à la périphérie intérieure, ce qui évitera toute sortie accidentelle de la frette (4) et même du joint (2).

2. Raccord pour la connexion hermétique de tuyaux, selon la revendication 1, dans lequel la partie de la frette introduite dans le collet (1) est d'une longueur légèrement supérieure à celle qui existe entre le joint (2) et l'embouchure de ce collet (1) de façon à ce que si l'on resserre l'écrou (7) monté sur le collet (1), cet écrou (7) actionne un collier-mâchoire (6) fixé sur le tuyau correspondant (T); le collier-mâchoire (6) se déplacera alors longitudinalement en repoussant la frette (4) contre le joint (2) qui, après compression axiale, se dilatera radialement contre le tube (T) ci-dessus entouré par le joint (2), ce qui assurera l'étanchéité de la connexion.
